# FASCICULE DE BREVET EUROPEEN

(11) **EP 4 031 757 B1**
(45) Date de publication et mention de la délivrance du brevet: **21.06.2023**
(21) Numéro de dépôt: 20780772.8
(22) Date de dépôt: 08.09.2020
(51) Int. Cl.: F02B 29/04, F28D 7/16, F28F 9/02

(54) **ECHANGEUR DE CHALEUR**
WÄRMETAUSCHER
HEAT EXCHANGER

(30) Priorité: 16.09.2019 FR 1910188
(43) Date de publication de la demande: 27.07.2022
(73) Titulaire: VALEO SYSTEMES THERMIQUES, 78320 Le Mesnil Saint-Denis (FR)
(72) Inventeur: ODILLARD, Laurent, 72322 LE MESNIL SAINT DENIS CEDEX (FR); BOLLOCH, Gilles, 78322 Le Mesnil Saint Denis (FR)
(74) Mandataire: Valeo Systèmes Thermiques
(86) Numéro de dépôt international: PCT/FR2020/051548
(87) Numéro de publication internationale: WO 2021/053282

(56) Documents cités:
- FR-A1- 2 984 478
- FR-A1- 3 026 166
- FR-A1- 3 055 821

## Description

La présente invention se rapporte au domaine des échangeurs de chaleur et plus particulièrement de la fixation entre un faisceau d'échange de chaleur et une boite d'entrée et/ou de sortie d'un fluide qui traverse le faisceau d'échange de chaleur. En particulier, la présente invention se rapporte à un échangeur de chaleur tel que défini par le préambule de la revendication 1, et tel que divulgué par le document FR 2 984 478.

Un échangeur de chaleur, comme par exemple un refroidisseur d'air de suralimentation, comporte généralement un faisceau d'échange de chaleur comprenant des tubes à l'intérieur desquels circule un premier fluide caloporteur. L'échangeur de chaleur comprend également des boites d'entrée ou de sortie d'un second fluide caloporteur, ici l'air de suralimentation en provenance d'un turbocompresseur. Les boites d'entrée ou de sortie sont fixées au faisceau d'échange de chaleur de sorte que le second fluide caloporteur circule entre les tubes et puisse échanger des calories avec le premier fluide caloporteur. La boite de sortie est également solidarisée au véhicule automobile en étant fixée à un moteur thermique dudit véhicule automobile.

Lors du procédé de fabrication de l'échangeur de chaleur, les boites sont généralement fixées au faisceau d'échange de chaleur au moyen d'une pièce de liaison. Cette pièce de liaison peut comprendre un bord métallique qui s'étend sur la périphérie du faisceau d'échange de chaleur et duquel s'étend une patte rabattue par des outils de sertissage sur un pied de la boite.

De manière habituelle, le sertissage de la patte sur la boite s'effectue à l'extérieur de l'échangeur de chaleur, c'est-à-dire en dehors du volume de l'échangeur de chaleur. Une telle méthode de sertissage présente alors l'inconvénient de nécessiter une distance minimum requise pour le sertissage et empêche alors une réduction des dimensions de l'échangeur de chaleur. Cet inconvénient est d'autant plus présent au niveau de la boite de sortie de l'échangeur de chaleur, de par sa position mitoyenne d'autres composants du véhicule automobile, notamment adjacents à la culasse.

L'invention a donc pour but de remédier à l'inconvénient cité ci-dessus en proposant une pièce de liaison dont au moins une patte de sertissage s'étend dans un volume interne de la boite, afin que son sertissage s'effectue dans le volume interne définie par ladite boite et qu'il permette une réduction des dimensions de l'échangeur de chaleur. L'invention porte donc sur un échangeur de chaleur comprenant au moins un faisceau d'échange de chaleur dans lequel circulent un premier fluide et un second fluide, l'échangeur de chaleur comprenant au moins un collecteur du premier fluide, le collecteur définissant un volume interne traversé par le premier fluide et un pied dudit collecteur étant tourné en direction dudit volume interne du collecteur, l'échangeur de chaleur comprenant également une pièce de liaison assurant une fixation du collecteur sur le faisceau d'échange de chaleur, caractérisé en ce que la pièce de liaison comprend au moins une patte ménagée dans le volume interne du collecteur, ladite patte s'étendant en recouvrement au moins partiel du pied du collecteur.

L'échangeur de chaleur est un dispositif permettant des échanges de calories entre deux fluides sans les mélanger. Dans le cadre de l'invention, celui-ci peut notamment être un refroidisseur d'air de suralimentation, dont la fonction est de refroidir l'air venant d'un turbocompresseur avant son entrée dans un moteur à combustion interne. L'échangeur de chaleur comprend alors au moins un faisceau d'échange de chaleur dans lequel circule le premier fluide, et le second fluide et comprend également une boite de sortie, prenant ici la forme du collecteur. Le premier fluide peut alors être un flux d'air venant du turbocompresseur et le second fluide un liquide, le collecteur permettant de diriger l'air sortant du faisceau d'échange de chaleur vers le moteur à combustion interne.

Le volume interne du collecteur est défini par des parois longitudinales et latérales dudit collecteur ainsi que par une bouche d'entrée et une bouche de sortie. Le pied du collecteur correspond alors à un épaulement qui émerge des parois longitudinales et latérales, cet épaulement étant dirigé vers le volume interne et prolongé sensiblement perpendiculairement par un talon.

Afin de solidariser le collecteur au faisceau d'échange de chaleur, la pièce de liaison est disposée sur la périphérie du faisceau d'échange de chaleur de telle sorte que le pied soit logé dans la pièce de liaison et que la patte de liaison s'étende dans le volume interne du collecteur en recouvrement du pied. Dit autrement, la pièce de liaison comprend une paroi de contact qui s'étend sur la périphérie du faisceau d'échange de chaleur et une patte prolongeant la paroi de contact et qui s'étend dans le volume interne du collecteur. On octroie ainsi plus d'espace pour le sertissage de la ou les pattes de la pièce de liaison s'étendant dans le volume interne du collecteur.

Selon l'invention, la pièce de liaison comprend au moins une paroi de base et une paroi de gorge qui délimitent au moins partiellement une gorge périphérique, le pied du collecteur étant logé au moins partiellement dans la gorge de la pièce de liaison.

Selon une caractéristique de l'invention, le pied du collecteur comprend une face d'appui en regard de la paroi de base de la gorge de la pièce de liaison et une face supérieure opposée à la face d'appui et en regard de la patte de la pièce de liaison, un joint étant logé entre ladite face d'appui et ladite paroi de base.

La paroi de base de la gorge de la pièce de liaison s'étend depuis la paroi de contact à l'opposé de la patte, c'est-à-dire vers l'extérieur du volume interne du collecteur et sensiblement perpendiculairement à ladite paroi de contact. La paroi de base est alors prolongée par une paroi de gorge qui s'étend sensiblement perpendiculairement à la paroi de gorge et en regard de la paroi de contact afin de former ladite gorge.

Le pied comprend d'une part une première face qui s'étend entre la face supérieure et la face d'appui, de telle sorte qu'elle soit en contact de la paroi de base de la pièce de liaison, et d'autre part une deuxième face opposée à la première face et en regard de la paroi de gorge. On comprend alors que le pied tel qu'il est disposé dans la pièce de liaison est bloqué en position.

Le joint positionné entre la paroi de base de la pièce de liaison et le face d'appui du pied de collecteur permet d'assurer l'étanchéité entre le pied et de la pièce de liaison. Selon une variante, le joint peut être directement intégré à la face d'appui du pied, en étant par exemple co-moulé avec celle-ci.

Selon une caractéristique de l'invention, un concentrateur de flux est disposé au moins en partie dans le volume interne du collecteur. Le concentrateur de flux permet d'adapter le cheminement fluidique à des culasses de moteurs thermiques de structures différentes. Le concentrateur de flux tend donc à ramener ou distribuer le flux de fluide pour le diriger vers les entrées de chaque chambre de combustions et ménagées dans la culasse. Le concentrateur de flux est alors une pièce rapportée disposée dans le volume interne du collecteur et présentant des dimensions, notamment de hauteur équivalente à la hauteur du collecteur. On entend par hauteur équivalente que le canaliseur de flux ne s'étend pas en dehors du volume interne du collecteur. Également, le concentrateur de flux comprend au moins une face de canalisation qui s'étend dans un plan incliné par rapport à une face du collecteur.

Selon une caractéristique de l'invention, le concentrateur de flux comprend une face de support en contact avec la patte de la pièce de liaison.

Selon une caractéristique de l'invention, le concentrateur de flux comprend une section d'entrée délimitée par la face de support et une section de sortie opposée à la section d'entrée et dirigée vers l'extérieur du volume interne du collecteur, la section de sortie étant plus petite que la section d'entrée. La section d'entrée est celle par laquelle le premier fluide entre dans le concentrateur de flux et la section de sortie est celle par laquelle ce premier fluide sort du concentrateur de flux.

De manière plus précise, le concentrateur de flux est disposé dans le volume interne du collecteur de telle sorte qu'il soit en appui sur au moins une patte de la pièce de liaison. Le concentrateur de flux peut être disposé entièrement sur la ou les pattes de la pièce de liaison, et permet de diriger le flux d'air sortant du faisceau d'échange de chaleur, par la présence d'une face de canalisation inclinée dans le volume interne et en direction du faisceau d'échange de chaleur.

Selon une caractéristique de l'invention, une saignée est ménagée sur une des faces du concentrateur de flux de telle sorte qu'elle communique avec le volume interne du collecteur et dans laquelle circule le flux d'air de l'échangeur de chaleur. La saignée évite les effets de surpression dans le volume interne du collecteur en évacuant une partie du flux d'air de l'échangeur de chaleur.

Selon une caractéristique de l'invention, une pièce d'étanchéité est disposée entre le collecteur et le concentrateur de flux, la pièce d'étanchéité étant configurée pour prendre appui contre un composant externe à l'échangeur de chaleur sur lequel ledit échangeur de chaleur est solidarisé. La pièce d'étanchéité peut être par exemple un joint et permet de limiter les fuites du premier fluide entre le volume interne du collecteur et le concentrateur de flux. Également, la pièce d'étanchéité assure l'étanchéité entre le volume interne du collecteur et la culasse contre laquelle est fixé le collecteur.

Selon une caractéristique de l'invention, le collecteur comprend un canal traversant et le concentrateur de flux comprend une ouverture ménagée en regard du canal traversant, le canal traversant et l'ouverture débouchant dans le volume interne du collecteur.

Le canal traversant et l'ouverture permettent par exemple le passage d'un appareil de mesure de température par un opérateur.

Selon une caractéristique de l'invention, le faisceau d'échange de chaleur comprend une enveloppe périphérique qui délimite au moins partiellement un espace interne dans lequel est logée une pluralité de tubes alignés en série et une pluralité de dispositifs de dissipation agencées entre des tubes de la pluralité de tubes, le second fluide circulant dans au moins un des tubes de la pluralité de tubes et le premier fluide circulant entre deux tubes de la pluralité de tubes le long d'au moins un des dispositifs de dissipation du faisceau d'échange de chaleur.

De manière plus précise, l'enveloppe périphérique définit un espace interne dans lequel sont disposées la pluralité de dispositifs de dissipation et la pluralité de tubes, le second fluide circulant dans au moins un des tubes après être entré dans le faisceau d'échange de chaleur au moyen d'au moins une conduite d'entrée et sortie au moyen d'au moins une conduite de sortie dudit second fluide. On comprend alors que le second fluide circulant dans les tubes échange des calories avec le premier fluide au moyen de la pluralité de dispositifs de dissipation, maximisant ainsi la surface d'échange de calories.

Selon une caractéristique de l'invention, le faisceau d'échange de chaleur comprend une première extrémité et une deuxième extrémité de part et d'autre du faisceau d'échange de chaleur et par lesquelles le premier fluide entre ou sort du faisceau d'échange de chaleur, une boite d'entrée du premier fluide étant disposée à la première extrémité du faisceau d'échange de chaleur tandis que le collecteur est disposé à la deuxième extrémité du faisceau d'échange de chaleur.

Les tubes et la pluralité de dispositifs de dissipation s'étendent entre la première extrémité et la deuxième extrémité du faisceau d'échange de chaleur. Une tubulure d'entrée peut être reliée à la boite d'entrée afin de diriger l'air sortant du turbocompresseur vers le faisceau d'échange de chaleur.

L'invention porte également sur un procédé d'assemblage d'un échangeur de chaleur selon les caractéristiques précédentes, au cours duquel on déforme au moins une des pattes de la pièce de liaison qui s'étend dans le volume interne du collecteur, de telle sorte qu'elle soit en recouvrement au moins partiel du pied dudit collecteur.

Une première étape du procédé peut par exemple comprendre la mise en place du joint dans la gorge de la pièce de liaison contre la paroi de base. Une deuxième étape peut être par exemple l'insertion du pied du collecteur dans la gorge de la pièce de liaison de telle sorte que la face d'appui du pied soit en contact du joint, la troisième étape étant alors la déformation de la patte de la pièce de liaison de telle sorte qu'elle soit en recouvrement de la face supérieure du pied. Enfin, une quatrième étape peut être la mise en place du concentrateur de flux dans le volume interne du collecteur de telle sorte sa face de support soit en contact de la patte de la pièce de liaison.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] est une vue générale en perspective d'un échangeur de chaleur selon l'invention ;
[Fig.2] est une vue en coupe suivant un plan OVT de l'échangeur de chaleur de la figure 1 ;
[Fig.3] est une vue rapprochée de la vue en coupe de la figure 2, montrant le collecteur solidarisé au faisceau d'échange de chaleur au moyen d'une pièce de liaison ;
[Fig.4] est une vue en perspective et de dessus du collecteur, montrant un volume interne et un concentrateur de flux disposé dans ledit volume interne ;
[Fig.5] illustre des étapes de montage de l'échangeur de chaleur de la figure 1.

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

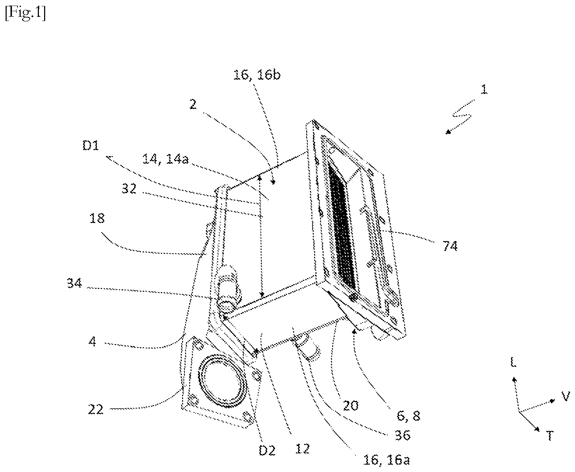

La figure 1 illustre un échangeur de chaleur 1 selon l'invention. L'échangeur de chaleur 1, ici un refroidisseur d'air de suralimentation, est composé d'un faisceau d'échange de chaleur 2, d'au moins une pièce de liaison 10, d'une boite d'entrée 4 et d'une boite de sortie 6, prenant ici la forme d'un collecteur 8.

Le faisceau d'échange de chaleur 2 est composé d'une enveloppe périphérique 12 prenant la forme d'un quadrilatère et définie par deux parois longitudinales 14 et deux parois latérales 16. De manière plus précise, le faisceau d'échange de chaleur 2 comprend une première paroi latérale 16a et une deuxième paroi latérale 16b qui s'étendent parallèlement l'une de l'autre et une première paroi longitudinale 14a et une deuxième paroi longitudinale 14b qui s'étendent parallèlement l'une de l'autre et perpendiculairement à la première paroi latérale 16a et la deuxième paroi latérale 16b, et de telle sorte qu'elles les relient.

On définit une première distance D1, comme la distance mesurée le long d'une droite parallèle à une direction longitudinale L de l'échangeur de chaleur 1, entre la première paroi latérale 16a et la deuxième paroi latérale 16b. On définit une deuxième distance D2, comme la distance mesurée le long d'une droite parallèle à une direction transversale T de l'échangeur de chaleur 1, perpendiculaire à la direction longitudinale L de l'échangeur de chaleur 1, entre la première paroi longitudinale 14a et la deuxième paroi longitudinale 14b. On comprend alors que la première distance D1 et la deuxième distance D2 définissent respectivement les dimensions longitudinale et transversale du faisceau d'échange de chaleur 2, la première distance D1 étant supérieure à la deuxième distance D2.

Le faisceau d'échange de chaleur 2 est délimité dans une direction verticale V, perpendiculaire aux directions longitudinale L et transversale T de l'échangeur de chaleur 1, par une première extrémité 18 et une deuxième extrémité 20, opposée à la première extrémité 18 selon la direction verticale V de l'échangeur de chaleur 1. La boite d'entrée 4 est alors positionnée au niveau de la première extrémité 18 du faisceau d'échange de chaleur 2, tandis que le collecteur 8 est positionné au niveau de la deuxième extrémité 20 du faisceau d'échange de chaleur 2.

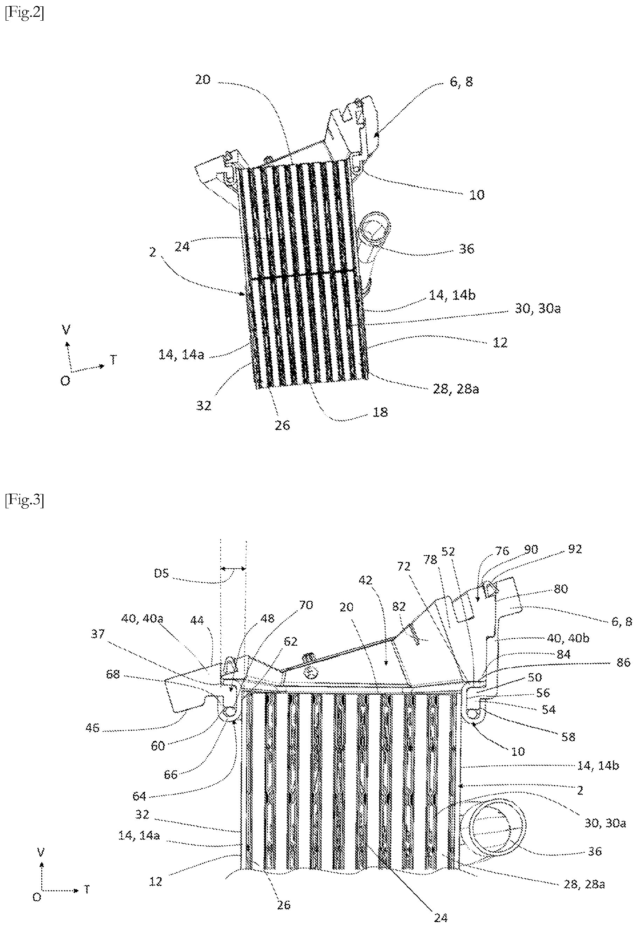

Une tubulure d'entrée 22 est reliée à la boite d'entrée 4 afin de diriger un premier fluide vers ladite boite d'entrée 4. On comprend alors que le premier fluide, par exemple un flux d'air de suralimentation d'un moteur à combustion interne, circule entre la boite d'entrée 4 et le collecteur 8, en traversant le faisceau d'échange de chaleur 2, et plus particulièrement en traversant un espace interne 24 du faisceau d'échange de chaleur 2, visible à la figure 2. L'espace interne 24 est défini par une face interne 26 de l'enveloppe périphérique 12 du faisceau d'échange de chaleur 2, et correspond à l'espace dans lequel sont logées une pluralité de tubes 28 et une pluralité de dispositifs de dissipation 30. Une face externe 32, opposée à la face interne 26 de l'enveloppe périphérique 12, correspond à la face de l'enveloppe périphérique 12 tournée à l'opposé de l'espace occupé par le faisceau d'échange de chaleur 2.

Les tubes 28 sont des tubes roulés ou résultent de la solidarisation de deux plaques entre lesquelles un second fluide circule et autour desquelles le premier fluide circule.

Les dispositifs de dissipation 30 peuvent prendre la forme d'ailette ou d'intercalaire disposée dans l'espace qui sépare deux tubes 28 successifs.

Les tubes et les ailettes composant respectivement la pluralité de tubes 28 et la pluralité de dispositifs de dissipation 30, s'étendent dans le faisceau d'échange de chaleur 2 entre la première extrémité 18 et la deuxième extrémité 20. Tel que cela est notamment visible à la figure 2, la pluralité de tubes 28 est agencée dans l'espace interne 24 en rangées de tubes 28a suivant la direction longitudinale L de l'échangeur de chaleur 1 en étant espacées les uns des autres afin de loger la pluralité de dispositifs de dissipation 30 agencée en rangées de dispositifs de dissipation 30a suivant la direction longitudinale L de l'échangeur de chaleur 1, en étant disposées entre les tubes 28a.

Le second fluide, ici un liquide, par exemple de l'eau glycolée, circule dans la pluralité de tubes 28, entre au moins une conduite d'entrée 34, visible à la figure 1, et au moins une conduite de sortie 36 visible à la figure 2. On comprend alors que la circulation du second fluide dans la pluralité de tubes 28 permet les échanges calorifiques avec le premier fluide traversant des canaux du faisceau d'échange de chaleur 2 délimités par les tubes 28. L'échange calorifique est alors optimisé par la présence de la pluralité de dispositifs de dissipation 30 disposés entre les tubes 28, les dispositifs de dissipation augmentant la surface d'échange de calories entre le premier fluide et le second fluide, de manière à refroidir le second fluide.

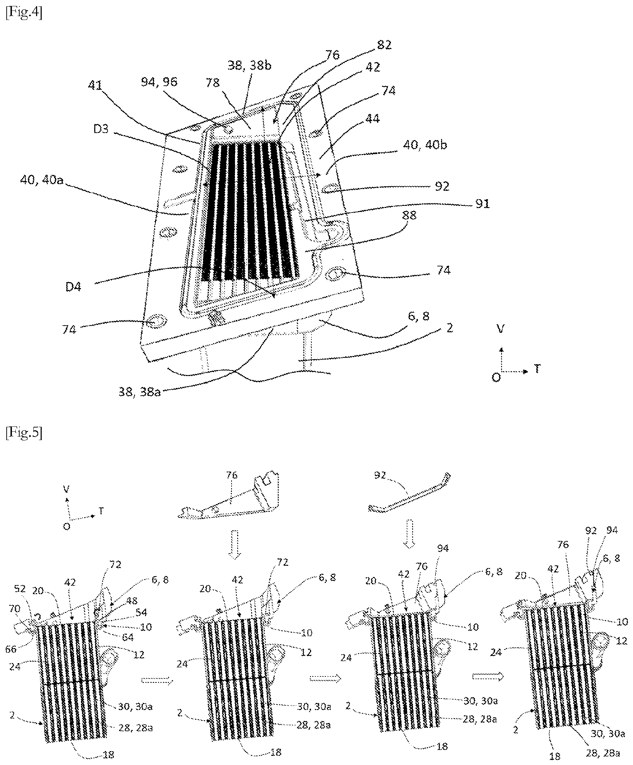

Le collecteur 8 et l'organe de liaison 10 vont maintenant être décrit plus en détail en rapport avec la figure 3 et la figure 4.

Le collecteur 8 prend sensiblement la forme d'un quadrilatère définit par deux bords latéraux 38 et deux bords longitudinaux 40. Le collecteur comprend également une bouche d'entrée 37 et une bouche de sortie 41, opposées l'une de l'autre suivant la direction verticale V de l'échangeur de chaleur et traversées par le premier fluide. Les bords latéraux et longitudinaux ainsi que la bouche d'entrée 37 et la bouche de sortie 41 définissent alors un volume interne 42 dudit collecteur 8.

De manière plus précise, un premier bord longitudinal 40a et un deuxième bord longitudinal 40b s'étendent globalement parallèlement à et dans le prolongement de la première paroi longitudinale 14a et la deuxième paroi longitudinale 14b du faisceau d'échange de chaleur 2. De même, un premier bord latéral 38a et un deuxième bord latéral 38b s'étendent globalement parallèlement à et dans le prolongement de la première paroi latérale 16a et la deuxième paroi latérale 16b du faisceau d'échange de chaleur 2, de telle sorte qu'elles relient le premier bord longitudinal 40a et le deuxième bord longitudinal 40b.

Selon une caractéristique de l'invention, le premier bord longitudinal 40a et le deuxième bord longitudinal 40b sont espacés l'un de l'autre suivant une troisième distance D3, mesurée le long d'une droite parallèle à la direction transversale T de l'échangeur de chaleur 1. Selon l'invention, la troisième distance D3 est strictement supérieure à la deuxième distance D2 évoquée précédemment. De même, le premier bord latéral 38a et le deuxième bord latéral 38b sont espacés l'un de l'autre suivant une quatrième distance D4, mesurée le long d'une droite parallèle à la direction longitudinale L de l'échangeur de chaleur 1. La quatrième distance D4 est alors strictement supérieure à la première distance D1 évoquée précédemment.

On comprend alors de ce qui précède que l'enveloppe périphérique 12 du faisceau d'échange de chaleur 2, et plus précisément la face externe 32 de l'enveloppe périphérique 12 et les bords longitudinaux 40 et latéraux 38 du collecteur 8 sont espacés l'un de l'autre d'une cinquième distance D5 non nulle.

Le volume interne 42 ainsi définit par les bords latéraux 38 et longitudinaux 40 du collecteur 8 est alors ménagé dans le prolongement de la pluralité de tubes 28 et de la pluralité de dispositifs de dissipation 30 au niveau de la deuxième extrémité 20 du faisceau d'échange de chaleur 2, de telle sorte que le premier fluide circulant depuis la boite d'entrée 4, traverse l'espace interne 24 du faisceau d'échange de chaleur 2 puis le volume interne 42 dudit collecteur 8, pour finalement sortir de l'échangeur de chaleur selon l'invention.

On définit une extrémité distale 44 du collecteur 8, comme l'extrémité la plus éloignée du faisceau d'échange de chaleur 2, et une extrémité proximale 46 du collecteur 8 opposée à l'extrémité distale 44 selon la direction verticale V de l'échangeur de chaleur 1, l'extrémité proximale 46 étant la plus proche du faisceau d'échange de chaleur 2.

Le collecteur 8 comprend un pied 48 ménagé à l'extrémité proximale 46 dudit collecteur 8, de telle sorte qu'il occupe au moins en partie l'espace ménagé par la cinquième distance D5 évoquée précédemment. Le pied 48 comprend notamment un épaulement 50 ménagé au niveau des bords longitudinaux 40 et des bords latéraux 38 du collecteur 8 et plus précisément au niveau de l'extrémité proximale 46 du collecteur 8. Dit autrement, l'épaulement 50 s'étend sensiblement perpendiculairement aux bords longitudinaux 40 et aux bords latéraux 38, en s'étendant vers une partie interne de l'échangeur de chaleur qui est parcourue par le premier fluide. On définit alors une face supérieure 52 de pied comme la face du pied 48 formée par l'épaulement 50 qui est dirigée vers le volume interne 42 du collecteur 8. Cette face supérieure 52 du pied 48 est ainsi accessible depuis le volume interne 42 du collecteur 8.

Un talon 54 s'étend depuis l'épaulement 50, perpendiculairement à celui-ci. Le talon 54 s'étend donc sensiblement parallèlement à l'enveloppe périphérique 12 et en regard de celle-ci. Le talon 54 est ainsi délimité au moins en partie par une première face 56, cette dernière étant tournée vers la face externe 32 du faisceau d'échange de chaleur 2 et par une deuxième face 58 opposée à la première face 56, c'est-à-dire tournée à l'opposé du faisceau d'échange de chaleur 2.

A une extrémité libre, le talon 54 est délimité par une face d'appui 60 qui s'étend sensiblement perpendiculairement à la première face 56 et la deuxième face 58 du talon 54 et entre ces dernières.

La pièce de liaison 10 assure la liaison mécanique qui relie le faisceau d'échangeur de chaleur avec le collecteur 8. Cette pièce de liaison 10 s'étend à la périphérie du faisceau d'échange de chaleur 2, dans l'espace ménagé par la cinquième distance D5 évoquée précédemment, au niveau de sa deuxième extrémité 20 et de telle sorte qu'elle soit en contact avec le pied 48 du collecteur 8 et la face externe 32 de l'enveloppe périphérique 12 du faisceau d'échange de chaleur 2. On comprend alors que la pièce de liaison 10 a pour fonction de solidariser le collecteur 8 au faisceau d'échange de chaleur 2.

A cette fin, la pièce de liaison 10 comprend une paroi de contact 62 qui s'étend parallèlement à l'enveloppe périphérique 12 et qui est disposée contre la face externe 32 de ladite enveloppe périphérique 12. La pièce de liaison 10 comprend également une gorge 64 délimitée par une paroi de base 66 qui s'étend sensiblement perpendiculairement depuis la paroi de contact 62 à une extrémité de cette paroi de contact 62 opposée au volume interne 42 du collecteur 8. La paroi de base 66 étant ensuite prolongée par une paroi de gorge 68 qui s'étend sensiblement perpendiculairement à et depuis ladite paroi de base 66 et vers le collecteur 8.

Selon un exemple de réalisation de l'invention, un joint 70 est logé dans la gorge 64 de la pièce de liaison 10, de telle sorte qu'il soit contre la paroi de base 66 qui délimite partiellement ladite gorge 64. Le joint 70 permet d'assurer l'étanchéité de la fixation du collecteur 8 contre le faisceau d'échange de chaleur 2. Selon un exemple non illustré, le joint 70 peut être directement intégré à la face d'appui 60 de le talon 54 dudit pied 48 du collecteur 8, notamment par un co-moulage et pour un surmoulage de ce joint 70 sur le collecteur 8.

Le pied 48 du collecteur 8 est disposé dans la pièce de liaison 10 de telle sorte que sa première face 56 soit contre la paroi de contact 62 et que sa face d'appui 60 soit en regard de la paroi de base 66 de la gorge 64 de la pièce de liaison 10, et notamment en contact du joint 70 logé dans la gorge 64. La deuxième face 58 du talon 54 est alors en regard de la paroi de gorge 68 de la pièce de liaison 10.

Au moins une patte 72 s'étend sensiblement perpendiculairement à la paroi de contact 62 de la pièce de liaison 10, depuis une extrémité opposée duquel s'étend la paroi de base 66. Dit autrement, la ou les pattes 72 émergent depuis la paroi de contact 62 de telle sorte qu'elles s'étendent dans le volume interne 42 du collecteur 8. De manière plus précise, la ou les pattes 72 s'étendent dans le volume interne 42 du collecteur 8 de telle sorte qu'elle s'étende en recouvrement de la face supérieure de pied 52 du pied 48 du collecteur 8.

On comprend de ce qui vient d'être décrit que la pièce de liaison 10 permet d'une part de bloquer les mouvements du collecteur 8 selon la direction transversale T de l'échangeur de chaleur 1, au moyen de la paroi de gorge 68 et qu'elle permet également de bloquer les mouvements du collecteur 8 suivant la direction verticale V de l'échangeur de chaleur 1, au moyen de la ou les pattes 72 et de la paroi de base 66.

La ou les pattes 72 sont ainsi accessibles depuis le volume interne du collecteur 8 de manière à pouvoir les replier par-dessus le pied 48 qui est reçu dans la gorge 64 de la pièce de liaison 10.

Tel que cela est visible aux figures 3 et 4, la bouche d'entrée 37 du collecteur 8 s'étend dans un plan sensiblement perpendiculaire à la pluralité de tubes 28 du faisceau d'échange de chaleur 2 tandis que la bouche de sortie 41 s'étend dans un plan incliné par rapport au plan définit par la bouche d'entrée 37.

Au moins une patte de fixation 74 s'étend depuis l'extrémité distale 44 du collecteur 8, et à l'opposé du volume interne 42 dudit collecteur 8. Selon l'exemple illustré, le collecteur 8 comprend une pluralité de pattes de fixation 74 comprenant chacune un alésage permettant la fixation de l'échangeur de chaleur 1 au sein d'un véhicule automobile, par exemple par vissage.

Selon l'exemple de l'invention illustré, un concentrateur de flux 76 est disposé au moins partiellement dans le volume interne 42 du collecteur 8. Le concentrateur de flux 76 comprend une paroi de canaliseur 78 qui s'étend dans le volume interne 42 du collecteur 8 en contact des bords longitudinaux 40 et des bords latéraux 38 du collecteur 8. La paroi de canaliseur 78 du concentrateur de flux 76 s'étend suivant une dimension verticale sensiblement identiques auxdits bords longitudinaux 40 et latéraux 38 du collecteur 8.

La paroi de canaliseur 78 comprend une face de collecteur 80 en regard des bords longitudinaux 40 et latéraux 38 du collecteur 8 et une face de canalisation 82, opposée à la face de collecteur 80 et tournée vers le volume interne 42 du collecteur 8. Selon l'invention, la face de collecteur 80 s'étend parallèlement audit bords latéraux 38 et longitudinaux 40 au contact duquel elle se trouve, tandis que la face de canalisation 82 s'étend dans un plan incliné par rapport à la face de collecteur 80, l'inclinaison étant dirigée vers le faisceau d'échange de chaleur 2. Une section de la sortie du concentrateur de flux 76 est ainsi de dimensions inférieures à une section de l'entrée de ce même concentrateur de flux 76.

Selon une caractéristique de l'invention, la paroi de canaliseur 78 comprend une première extrémité de concentrateur 84, d'où s'étend une face de support 86, et une deuxième extrémité de concentrateur 88, opposée à la première extrémité 84 suivant la direction verticale V de l'échangeur de chaleur 1. La face de support 86 s'étend sensiblement perpendiculairement par rapport aux bords longitudinaux 40 et latéraux 38 du collecteur 8 et de telle sorte qu'elle soit en appui sur au moins une des pattes 72 de la pièce de liaison 10. On comprend alors que le concentrateur de flux 76 est disposé dans le volume interne 42 du collecteur 8 de telle sorte qu'il repose sur la pièce de liaison 10.

On comprend de la description faite du concentrateur de flux 76 que celui-ci permet de diriger le flux d'air sortant depuis le faisceau d'échange de chaleur 2 et traversant le volume interne 42 du collecteur 8 suivant une trajectoire orientée, notamment au moyen de sa face de canalisation 82 inclinée en direction dudit faisceau d'échange de chaleur 2.

Le concentrateur de flux 76 permet également d'adapter le collecteur 8 à des culasses de moteur thermique dont les caractéristiques structurelles peuvent être différentes d'un véhicule automobile à l'autre.

Entre le collecteur 8 et le concentrateur de flux 76 au niveau respectivement de l'extrémité distale 44 et de la deuxième extrémité de concentrateur 88, est ménagée un dégagement périphérique 90, dans lequel est disposé une pièce d'étanchéité 92, pouvant être par exemple un joint. La pièce d'étanchéité 92 a pour fonction d'assurer l'étanchéité entre le collecteur 8 et le concentrateur de flux 76 et également l'étanchéité entre un composant externe à l'échangeur de chaleur, par exemple une culasse, et le collecteur 8 fixé sur le composant externe.

Un canal traversant 94 est ménagé au travers du collecteur 8, et plus précisément dans un des bords latéraux 38 dudit collecteur 8, de telle sorte que le canal traversant 94 débouche dans le volume interne 42 du collecteur 8. A cette fin, une ouverture 96 est ménagée dans le concentrateur de flux 76 en regard du canal traversant 94, de telle sorte que l'ouverture 96 et le canal traversant 94 débouche dans le volume interne 42 du collecteur 8. Un tel canal traversant 94 associé à l'ouverture 96 du concentrateur de flux 76 permet par exemple, le passage d'un outillage de mesure de température ou de pression.

Selon un exemple de l'invention, au moins une saignée 91 est ménagée sur une des faces du concentrateur de flux 76, plus précisément au niveau de la deuxième extrémité de concentrateur 88 du concentrateur de flux 76 et de telles sorte qu'elle communique avec le volume interne 42 du collecteur 8. Ainsi, on comprend qu'une partie du flux d'air circulant dans le volume interne 42, circule dans la saignée 91 du concentrateur de flux 76. On évite ainsi une surpression au sein du volume interne 42 du collecteur 8.

Un procédé d'assemblage du collecteur 8 sur le faisceau d'échange de chaleur 2 va maintenant être décrit en rapport avec la figure 5 qui illustre quatre étapes de ce procédé de montage par quatre schémas.

Lors du procédé d'assemblage, la pièce de liaison 10 est préalablement solidarisée à la face externe 32 de l'enveloppe périphérique 12 du faisceau d'échange de chaleur 2, au niveau de la deuxième extrémité verticale 20, tel que précédemment évoqué. A titre d'exemple, la pièce de liaison 10 est ainsi brasée contre la face externe 32 de l'enveloppe périphérique 12. La ou les pattes 72 de la pièce de liaison 10 s'étend alors parallèlement à l'enveloppe périphérique 12 du faisceau d'échange de chaleur 2, tel que cela est visible à la figure 5.

A une première étape du procédé d'assemblage, un opérateur dispose le joint 70 dans la gorge 64 de la pièce de liaison 10, c'est-à-dire contre la paroi de base 66. A la suite de cette première étape, la deuxième étape du procédé d'assemblage consiste à positionner le collecteur 8 au niveau de la deuxième extrémité 20 du faisceau d'échange de chaleur 2, de telle sorte que le pied 48 du collecteur 8 soit logé dans la pièce de liaison 10.

De manière plus précise, l'opérateur dispose le pied 48 du collecteur 8 dans l'organe de liaison 10 afin de que le talon 54 soit logée dans la gorge 64 de la pièce de liaison 10 et qu'ainsi le joint 70 soit interposé entre la face d'appui 60 et la paroi de base 66 de la gorge 64.

A la suite de l'installation du collecteur 8, la patte 72 ou les pattes 72 de la pièce de liaison 10 s'étend alors dans volume interne 42 du collecteur 8. De manière plus précise, la patte 72 s'étend parallèlement entre l'enveloppe périphérique 12 du faisceau d'échange de chaleur 2 et les bords longitudinaux 40 et les bords latéraux 38 du collecteur 8.

A une troisième étape, l'opérateur introduit un dispositif de sertissage (non visible) dans le volume interne 42 du collecteur 8 afin de plier la ou les pattes 72 de la pièce de liaison 10 sur la face supérieure 52 du pied 48. Dit autrement, l'opérateur déforme la patte 72 de la pièce de liaison 10 afin que celle-ci soit en contact de ladite face supérieure 52 du pied 48. A la suite de cette opération de sertissage, la patte 72 s'étend perpendiculairement à la paroi de contact 62 de la pièce de liaison 10. Ce pliage de la ou des pattes 72 est réalisé de manière à ce que l'extrémité libre de la ou des pattes 72 soit tournée vers l'environnement extérieur à l'échangeur de chaleur selon l'invention. Cette troisième étape est ainsi un sertissage du collecteur 8 sur le faisceau d'échange de chaleur 2, à partir de pattes 72 présentes dans le volume interne 42 de l'échangeur de chaleur.

On comprend alors que la patte 72 telle qu'elle est sertie sur le pied 48 du collecteur 8 permet, en coopération avec la gorge 64 de la pièce de liaison 10, de bloquer le mouvement du collecteur 8 suivant la direction verticale V, en empêchant toute sortie du pied 48 en dehors de la gorge 64 de la pièce de liaison 10.

A une quatrième étape du procédé d"assemblage, l'opérateur dispose le concentrateur de flux 76 dans le volume interne 42 du collecteur 8 de telle sorte que la face de support 86 dudit concentrateur de flux 76 soit en appui en partie ou entièrement sur la patte 72 de la pièce de liaison 10.

Enfin, à une cinquième étape optionnelle, l'opérateur dispose le moyen d'étanchéité 92 entre le collecteur 8 et le concentrateur de flux 76, au niveau respectivement de l'extrémité distale 44 du collecteur 8 et de la deuxième extrémité de concentrateur 88 du concentrateur de flux 76, dans le dégagement périphérique 90 ménagée à cet effet. L'avantage d'un tel procédé d'assemblage du collecteur 8 avec la pièce de liaison 10 est qu'il permet le sertissage directement dans le volume interne 42 du collecteur 8 permettant ainsi de réduire les dimensions de l'échangeur de chaleur, la nécessité d'une distance minimum de sertissage de la boite de sortie à l'extérieur de l'échangeur de chaleur n'étant plus nécessaire.

## Revendications

1. Échangeur de chaleur (1) comprenant au moins un faisceau d'échange de chaleur (2) dans lequel circulent un premier fluide et un second fluide, l'échangeur de chaleur (1) comprenant au moins un collecteur (8) du premier fluide, le collecteur (8) définissant un volume interne (42) traversé par le premier fluide, ledit collecteur comportant un pied (48), l'échangeur de chaleur (1) comprenant également une pièce de liaison (10) assurant une fixation du collecteur (8) sur le faisceau d'échange de chaleur (2), **caractérisé en ce que** le pied (48) dudit collecteur (8) est tourné en direction dudit volume interne (42) du collecteur (8), et **en ce que** la pièce de liaison (10) comprend au moins une patte (72) ménagée dans le volume interne (42) du collecteur (8), ladite patte (72) s'étendant en recouvrement au moins partiel du pied (48) du collecteur (8).

2. Échangeur de chaleur (1) selon la revendication précédente, dans lequel la pièce de liaison (10) comprend au moins une paroi de base (66) et une paroi de gorge (68) qui délimitent au moins partiellement une gorge (64) périphérique, le pied (48) du collecteur (8) étant logé au moins partiellement dans la gorge (64) de la pièce de liaison (10).

3. Échangeur de chaleur (1) selon la revendication précédente, dans lequel le pied (48) du collecteur (8) comprend une face d'appui (60) en regard de la paroi de base (66) de la gorge (64) de la pièce de liaison (10) et une face supérieure (52) opposée à la face d'appui (60) et en regard de la patte (72) de la pièce de liaison (10), un joint (70) étant logé entre ladite face d'appui (60) et ladite paroi de base (66).

4. Échangeur de chaleur (1) selon l'une quelconque des revendications précédentes, dans lequel un concentrateur de flux (76) est disposé au moins en partie dans le volume interne (42) du collecteur (8).

5. Échangeur de chaleur (1) selon la revendication précédente, dans lequel le concentrateur de flux (76) comprend une face de support (86) en contact avec la patte (72) de la pièce de liaison (10).

6. Echangeur de chaleur (1) selon la revendication précédente, dans lequel le concentrateur de flux (76) comprend une section d'entrée délimitée par la face de support (86) et une section de sortie opposée à la section d'entrée et dirigée vers l'extérieur du volume interne (42) du collecteur (8), la section de sortie étant plus petite que la section d'entrée.

7. Echangeur de chaleur (1) selon l'une quelconque des revendications 4 à 6, dans lequel une saignée (91) est ménagée sur une des faces du concentrateur de flux (76) de telle sorte qu'elle communique avec le volume interne (42) du collecteur (8) et dans laquelle circule un flux d'air de l'échangeur de chaleur (1).

8. Échangeur de chaleur (1) selon l'une quelconque des revendications 4 à 7, dans lequel une pièce d'étanchéité (92) est disposée entre le collecteur (8) et le concentrateur de flux (76), la pièce d'étanchéité (92) étant configurée pour prendre appui contre un composant externe à l'échangeur de chaleur (1) sur lequel ledit échangeur de chaleur (1) est solidarisé.

9. Échangeur de chaleur (1) selon l'une quelconque des revendications précédentes, dans lequel le faisceau d'échange de chaleur (2) comprend une enveloppe périphérique (12) qui délimite au moins partiellement un espace interne (24) dans lequel est logée une pluralité de tubes (28) alignés en série et une pluralité de dispositifs de dissipation (30) agencées entre des tubes (28) de la pluralité de tubes (28), le second fluide circulant dans au moins un des tubes de la pluralité de tubes (28) et le premier fluide circulant entre deux tubes (28) de la pluralité de tubes (28) le long d'au moins un des dispositifs de dissipation du faisceau d'échange de chaleur (2).

10. Échangeur de chaleur (1) selon l'une quelconque des revendications précédentes, dans lequel le faisceau d'échange de chaleur (2) comprend une première extrémité (18) et une deuxième extrémité (20) de part et d'autre du faisceau d'échange de chaleur (2) et par lesquelles le premier fluide entre ou sort du faisceau d'échange de chaleur (2), une boite d'entrée (4) du premier fluide étant disposée à la première extrémité (18) du faisceau d'échange de chaleur (2) tandis que le collecteur (8) est disposé à la deuxième extrémité (20) du faisceau d'échange de chaleur (2).

11. Procédé d'assemblage d'un échangeur de chaleur (1) selon l'une quelconque des revendications précédentes, au cours duquel on déforme au moins une des pattes (72) de la pièce de liaison (10) qui s'étend dans le volume interne (42) du collecteur (8), de telle sorte qu'elle soit en recouvrement au moins partiel du pied (48) dudit collecteur (8).

## Patentansprüche

1. Wärmetauscher (1), der mindestens ein Wärmeaustauschbündel (2) umfasst, in dem ein erstes Fluid und ein zweites Fluid zirkulieren, wobei der Wärmetauscher (1) mindestens einen Sammler (8) für das erste Fluid umfasst, wobei der Sammler (8) ein Innenvolumen (42) definiert, das von dem ersten Fluid durchströmt wird, wobei der Sammler einen Fuß (48) aufweist, wobei der Wärmetauscher (1) auch ein Verbindungsteil (10) umfasst, das eine Fixierung des Sammlers (8) an dem Wärmeaustauschbündel (2) gewährleistet, **dadurch gekennzeichnet, dass** der Fuß (48) des Sammlers (8) in Richtung des Innenvolumens (42) des Sammlers (8) gewandt ist, und dadurch, dass das Verbindungsteil (10) mindestens eine Lasche (72) umfasst, die in dem Innenvolumen (42) des Sammlers (8) ausgebildet ist, wobei sich die Lasche (72) unter mindestens teilweiser Überlappung des Fußes (48) des Sammlers (8) erstreckt.

2. Wärmetauscher (1) nach dem vorhergehenden Anspruch, bei dem das Verbindungsteil (10) mindestens eine Basiswand (66) und eine Rillenwand (68) umfasst, die mindestens teilweise eine umfängliche Rille (64) begrenzen, wobei der Fuß (48) des Sammlers (8) mindestens teilweise in der Rille (64) des Verbindungsteils (10) aufgenommen ist.

3. Wärmetauscher (1) nach dem vorhergehenden Anspruch, bei dem der Fuß (48) des Sammlers (8) eine Anlagefläche (60) gegenüber der Basiswand (66) der Rille (64) des Verbindungsteils (10) umfasst und eine obere Fläche (52) entgegengesetzt zur Anlagefläche (60) und gegenüber der Lasche (72) des Verbindungsteils (10), wobei eine Dichtung (70) zwischen der Anlagefläche (60) und der Basiswand (66) aufgenommen ist.

4. Wärmetauscher (1) nach einem der vorhergehenden Ansprüche, bei dem ein Stromkonzentrator (76) mindestens zum Teil in dem Innenvolumen (42) des Sammlers (8) angeordnet ist.

5. Wärmetauscher (1) nach dem vorhergehenden Anspruch, bei dem der Stromkonzentrator (76) eine Stützfläche (86) umfasst, die in Kontakt mit der Lasche (72) des Verbindungsteils (10) ist.

6. Wärmetauscher (1) nach dem vorhergehenden Anspruch, bei dem der Stromkonzentrator (76) einen Einlassquerschnitt umfasst, der durch die Stützfläche (86) begrenzt wird, und einen Auslassquerschnitt, der zum Einlassquerschnitt entgegengesetzt ist und nach außerhalb des Innenvolumens (42) des Sammlers (8) gerichtet ist, wobei der Auslassquerschnitt kleiner als der Einlassquerschnitt ist.

7. Wärmetauscher (1) nach einem der Ansprüche 4 bis 6, bei dem eine Vertiefung (91) auf einer der Flächen des Stromkonzentrators (76) so ausgebildet ist, dass sie mit dem Innenvolumen (42) des Sammlers (8) in Verbindung steht, und in der ein Luftstrom des Wärmetauschers (1) zirkuliert.

8. Wärmetauscher (1) nach einem der Ansprüche 4 bis 7, bei dem ein Abdichtungsteil (92) zwischen dem Sammler (8) und dem Stromkonzentrator (76) angeordnet ist, wobei das Abdichtungsteil (92) dazu ausgestaltet ist, an einem Bauteil außerhalb des Wärmetauschers (1) anzuliegen, an dem der Wärmetauscher (1) befestigt ist.

9. Wärmetauscher (1) nach einem der vorhergehenden Ansprüche, bei dem das Wärmeaustauschbündel (2) einen umfänglichen Mantel (12) umfasst, der mindestens teilweise einen Innenraum (24) begrenzt, in dem eine Mehrzahl von Rohren (28) aufgenommen ist, die in Reihe ausgerichtet sind, und eine Mehrzahl von Ableitungsvorrichtungen (30), die zwischen Rohren (28) der Mehrzahl von Rohren (28) eingerichtet sind, wobei das zweite Fluid in mindestens einem der Rohre der Mehrzahl von Rohren (28) zirkuliert und das erste Fluid zwischen zwei Rohren (28) der Mehrzahl von Rohren (28) entlang mindestens einer der Ableitungsvorrichtungen des Wärmeaustauschbündels (2) zirkuliert.

10. Wärmetauscher (1) nach einem der vorhergehenden Ansprüche, bei dem das Wärmeaustauschbündel (2) ein erstes Ende (18) und ein zweites Ende (20) umfasst, die zu beiden Seiten des Wärmeaustauschbündels (2) liegen und durch die das erste Fluid in das Wärmeaustauschbündel (2) eintritt oder
daraus austritt, wobei ein Einlassgehäuse (4) für das erste Fluid an dem ersten Ende (18) des Wärmeaustauschbündels (2) angeordnet ist, während der Sammler (8) an dem zweiten Ende (20) des Wärmeaustauschbündels (2) angeordnet ist.

11. Verfahren zur Montage eines Wärmetauschers (1) nach einem der vorhergehenden Ansprüche, in dessen Verlauf man mindestens eine der Laschen (72) des Verbindungsteils (10) verformt, das sich in dem Innenvolumen (42) des Sammlers (8) erstreckt, so dass sie in mindestens teilweiser Überlappung des Fußes (48) des Sammlers (8) ist.

## Claims

1. Heat exchanger (1) comprising at least one heat-exchange core (2) in which a first fluid and a second fluid circulate, the heat exchanger (1) comprising at least one manifold (8) for the first fluid, the manifold (8) defining an internal volume (42) through which the first fluid passes, the said manifold having a foot (48), the heat exchanger (1) also comprising a connecting part (10) for fixing the manifold (8) to the heat-exchange core (2), **characterized in that** the foot (48) of the said manifold (8) faces the said internal volume (42) of the manifold (8), and **in that** the connecting part (10) comprises at least one tab (72) formed in the internal volume (42) of the manifold (8), the said tab (72) extending so as to at least partially overlap the foot (48) of the manifold (8).

2. Heat exchanger (1) according to the preceding claim, wherein the connecting part (10) comprises at least a base wall (66) and a groove wall (68) which at least partially delimit a peripheral groove (64), the foot (48) of the manifold (8) being received at least partially in the groove (64) of the connecting part (10).

3. Heat exchanger (1) as claimed in the preceding claim, wherein the foot (48) of the manifold (8) comprises a bearing face (60) facing the base wall (66) of the groove (64) of the connecting part (10) and an upper face (52) which is opposite to the bearing face (60) and faces the tab (72) of the connecting part (10), with a gasket (70) being received between the said bearing face (60) and the said base wall (66).

4. Heat exchanger (1) according to any one of the preceding claims, wherein a flow concentrator (76) is disposed at least in part in the internal volume (42) of the manifold (8).

5. Heat exchanger (1) according to the preceding claim, wherein the flow concentrator (76) comprises a support face (86) which is in contact with the tab (72) of the connecting part (10).

6. Heat exchanger (1) according to the preceding claim, wherein the flow concentrator (76) comprises an inlet section delimited by the support face (86) and an outlet section that is opposite the inlet section and directed towards the outside of the internal volume (42) of the manifold (8), the outlet section being smaller than the inlet section.

7. Heat exchanger (1) according to any one of Claims 4 to 6, wherein a slit (91) is formed in one of the faces of the flow concentrator (76) such that the said slit communicates with the internal volume (42) of the manifold (8) and in which slit an air flow of the heat exchanger (1) circulates.

8. Heat exchanger (1) according to any one of Claims 4 to 7, wherein a sealing part (92) is disposed between the manifold (8) and the flow concentrator (76), the sealing part (92) being configured to bear against a component which is external to the heat exchanger (1) and to which the said heat exchanger (1) is secured.

9. Heat exchanger (1) according to any one of the preceding claims, wherein the heat-exchange core (2) comprises a peripheral shell (12) which at least partially delimits an internal space (24) in which a plurality of tubes (28) aligned in series and a plurality of dissipation devices (30) arranged between the tubes (28) of the plurality of tubes (28) are received, the second fluid circulating in at least one of the tubes of the plurality of tubes (28) and the first fluid circulating between two tubes (28) of the plurality of tubes (28) along at least one of the dissipation devices of the heat-exchange core (2).

10. Heat exchanger (1) according to any one of the preceding claims, wherein the heat-exchange core (2) comprises a first end (18) and a second end (20) on either side of the heat-exchange core (2), through which ends the first fluid enters or leaves the heat-exchange core (2), an inlet header tank (4) for the first fluid being disposed at the first end (18) of the heat-exchange core (2), whereas the manifold (8) is disposed at the second end (20) of the heat-exchange core (2).

11. Method for assembling a heat exchanger (1) according to any one of the preceding claims, in the course of which at least one of the tabs (72) of the connecting part (10) which extends into the internal volume (42) of the manifold (8) is deformed, such that the said tab at least partially overlaps the foot (48) of the said manifold (8).
